# EUROPÄISCHE PATENTSCHRIFT

(11) **EP 2 421 377 B1**
(45) Veröffentlichungstag und Bekanntmachung des Hinweises auf die Patenterteilung: **26.11.2014**
(21) Anmeldenummer: 10719926.7
(22) Anmeldetag: 23.04.2010
(51) Int. Cl.: A21D 8/04

(54) **HALTBARKEITSVERLÄNGERUNG VON SAUERTEIGBACKWAREN**
Durability extension of baked sourdough goods
Augmentation de la durabilité de produits cuits au levain

(30) Priorität: 24.04.2009 EP 09158710
(43) Veröffentlichungstag der Anmeldung: 29.02.2012
(73) Patentinhaber: Ernst Böcker GmbH & Co. KG, 32427 Minden (DE)
(72) Erfinder: BRANDT, Markus, 32423 Minden (DE); AMANN-BRANDT, Judith, 32457 Porta-Westfalica (DE)
(74) Vertreter: Fleuchaus, Andrea
(86) Internationale Anmeldenummer: PCT/EP2010/055489
(87) Internationale Veröffentlichungsnummer: WO 2010/122165

(56) Entgegenhaltungen:
- EP-A- 1 283 011
- US-A1- 2005 281 917
- WATANABE KOICHI ET AL: "Lactobacillus kisonensis sp nov., Lactobacillus otakiensis sp nov., Lactobacillus rapi sp nov and Lactobacillus sunkii sp nov., heterofermentative species isolated from sunki, a traditional Japanese pickle" INTERNATIONAL JOURNAL OF SYSTEMATIC AND EVOLUTIONARY MICROBIOLOGY, Bd. 59, Nr. Part 4, April 2009 (2009-04), Seiten 754-760, XP002548475 ISSN: 1466-5026
- KROONEMAN J ET AL: "Lactobacillus diolivorans sp. nov., a 1,2-propanediol-degrading bacter" INTERNATIONAL JOURNAL OF SYSTEMATIC AND EVOLUTIONARY MICROBIOLOGY, SOCIETY FOR GENERAL MICROBIOLOGY, READING, GB, Bd. 52, Nr. 2, 1. März 2002 (2002-03-01), Seiten 639-646, XP002324276 ISSN: 1466-5026
- HUFNER E ET AL: "Global transcriptional response of Lactobacillus reuteri to the sourdough environment" SYSTEMATIC AND APPLIED MICROBIOLOGY,, Bd. 31, Nr. 5, 1. Oktober 2008 (2008-10-01), Seiten 323-338, XP025505392 ISSN: 0723-2020 [gefunden am 2008-08-30]
- CORSETTI ET AL: "Lactobacilli in sourdough fermentation" FOOD RESEARCH INTERNATIONAL, ELSEVIER APPLIED SCIENCE, BARKING, GB, Bd. 40, Nr. 5, 17. April 2007 (2007-04-17) , Seiten 539-558, XP022032071 ISSN: 0963-9969

## Beschreibung

Die vorliegende Erfindung betrifft ein verbessertes Verfahren zur Herstellung von Sauerteig und Backwaren mit verlängerter Haltbarkeit, wobei durch Kofermentation von ausgesuchten Lactobazillen biologische Konservierungsstoffe im Teig bzw. den Backwaren angereichert werden.

Die Herstellung genussfertiger Lebensmittel unter Einsatz fermentierter Cerealien, gehört zu den ältesten, von der Menschheit angewandten biotechnologischen Prozessen. Die mengenmäßig höchsten Anteile entfallen dabei auf die Herstellung von Brot. So lag der Pro-Kopf-Verbrauch an Brot im Getreidewirtschaftsjahr 2002/2003 bei 86,6 kg.

Mindestens 20 % des Brotes wird in Deutschland mit Hilfe von Sauerteig oder Teigsäuerungsmitteln hergestellt. Ein Sauerteigzusatz bewirkt u.a. durch die Absenkung des pH-Wertes eine verlängerte Haltbarkeit von Broten. Dennoch geht ein Teil wertvoller Lebensmittel, wie zum Beispiel Weizenbrot, durch Verderb für die Ernährung des Menschen verloren. Da Brot immer häufiger in geschnittener Form in den Handel kommt, z. B. Toastbrot, weist dieses aufgrund der größeren Oberfläche eine höhere Kontaminationsgefahr z.B. durch Schimmel auf. Zu den Hauptvertretern hierbei zählen die Gattungen *Penicillium sp., Aspergillus sp., Rhizopus sp., Mucor sp.,* aber auch Hefearten des sog. "Kreideschimmels".

Der Verzehr solch kontaminierter Produkte, stellt für den Endverbraucher ein gesundheitliches Risiko dar, denn Schimmelpilze können Mykotoxine bilden. Somit ist die Schimmelbekämpfung bei Brot, sowohl aus gesundheitlichen als auch aus wirtschaftlichen Gründen notwendig.

Maßnahmen zur Haltbarkeitsverlängerung von Brot und Backwaren sind primär auf die Verzögerung der Schimmelbildung ausgerichtet. Die Verfahrensprinzipien werden in chemische, wie z. B. der Zusatz zugelassener Konservierungsstoffe, in physikalische, wie die thermische Produktbehandlung und in die biologischen Verfahren eingeteilt.

Die biologischen Verfahren umfassen dabei die Verwendung von Sauerteig und Sauerteigstarterkulturen, denn die Stoffwechselaktivitäten der an der Sauerteigfermentation beteiligten Mikroorganismen erlauben es, auf biologische Weise "backaktive" Komponenten zu erzeugen, die normalerweise in Form von zu deklarierenden Zutaten dem Brotteig zugesetzt werden müssen. Beispiele hierfür sind u.a. die Bildung von Exopolysacchariden durch Lactobazillen, die das Altbackenwerden des Brotes verzögern, oder auch die Bildung der antimikrobiell wirkenden Essigsäure im Brotteig. Leider ist aber die Bildung von Essigsäure insbesondere in Weizensauerteigen stark begrenzt.

Es besteht jedoch ein hohes wirtschaftliches Interesse, deklarationsfreie, die Haltbarkeit verlängernde Produkte zu offerieren.

Es war daher Ziel dieser Arbeit Starterkulturen bereitzustellen und gegebenenfalls zu optimierten, die eine verzögernde Wirkung auf den Brotverderb haben. Die vorliegende Erfindung eröffnet durch den Einsatz von Mikroorganismen als Starterkulturen, die normalerweise selten an der Sauerteigfermentation beteiligt sind, neue Wege zur weiteren Optimierung der Brotqualität.

Es ist auf die Leistung und die Kenntnisse der Erfinder zurückzuführen, dass Mikroorganismen, die üblicherweise nichts mit Brotbacken zu tun haben und die in der Lage sind Propionsäure zu synthetisieren, aufgefunden werden konnten und zur Anreicherung von Sauerteigstarterkulturen und damit zum Brotbacken eingesetzt werden konnten.

Die Erfindung lehrt dementsprechend den Einsatz und die Verwendung von Mikroorganismen in Sauerteig, die neben der Milchsäuregärung auch die Eigenschaft haben, andere organische Säuren zu bilden. Insbesondere betrifft die Erfindung Milchsäurebakterien, die im Sauerteig in der Lage sind Essigsäure, in deutlich über dem Normalmass liegenden Mengen, und/oder Propionsäure zu bilden.

Mit einer entsprechenden Starterkultur könnten direkt während der Teigerzeugung signifikante Menge an Essigsäure und/oder Propionsäure im Teig gebildet werden, die dann die Lagerfähigkeit der Backwaren verbessert und dessen Verderb durch z. B. Pilzbefall verzögert. Problematisch in diesem Zusammenhang ist es eine Starterkulturen bereitzustellen, die ein wünschenswertes Gleichgewicht an Stoffwechselprodukten aufweisen, denn wenn z.B. zu viel Propionsäure entsteht, nimmt die Backware einen käseartigen, unappetitlichen Geruch an.

Es ist bekannt, dass Essigsäure und deren lösliche Salze eine leichte antimikrobiell Wirkung zeigen. Dies ergibt sich vor allem durch ihre pH-absenkende Wirkung innerhalb der Mikroorganismenzelle. Aufgrund der Lipidnatur der mikrobiellen Cytoplasmamembran, kann nur die undissozierte fettlösliche Säure in die Zelle eindringen. Der Anteil an undissozierter Essigsäure ist umso höher, je tiefer das pH im Lebensmittel ist. In Roggensauerteigen könne im Sauerteig bis zu 0,4 % Essigsäure entstehen. Bei einer entsprechend hohen Einsatzmenge des Sauerteiges reicht dies zum Schutz vor Schimmelpilzen aus. Im Substrat Weizen hingegen werden nur 0,03 % gebildet. Der Zusatz von Essigsäure ist als Konservierungsmittel in Weizenteigen nicht geeignet da es zu Geschmacksveränderungen und - beeinträchtigungen kommt. Daher wird häufig zur Konservierung von Weizenbroten und zum Schutz des Verderbs durch fadenziehende Bakterien (*Bacillus spec.)* und Schimmelpilze Natriumdiacetat als Essigsäurequelle zugesetzt.

Ferner ist es bekannt, dass Propionsäure und deren gut lösliche Salze eine antimikrobielle Wirkung entfalten. Propionsäure wirkt dabei durch eine Enzymhemmung, indem sie sich in der Zelle anhäuft und den Stoffwechsel blockiert. Weiterhin tritt Propionsäure in Konkurrenz zu anderen notwendigen Wuchsstoffen, vor allem zu Alanin und anderen Aminosäuren. Bei oraler Aufnahme sind Propionsäure und die Propionate akut ungiftig und besitzen kein erkennbares toxisches Potential. Sie werden leicht vom Verdauungstrakt aufgenommen und entweder kalorisch im Körper verwertet oder in Kohlenhydrate und Fette eingebaut. Seit Ende der 30er Jahre werden Propionate in den USA zur Brot- und zur Käsekonservierung zugesetzt.

Der gezielte Einsatz von Propionsäure und deren Salze, vorwiegend bei säurearmen Weißbrot, erfolgte erstmals 1938, nachdem bereits im Jahre 1906 die Wirkung organischer Säuren gegen das Fadenziehen von Backwaren erkannt worden war. Je nach Pilzart werden Schimmelpilze bei einem pH von 5,5 durch Konzentrationen von 0,0125 -1,25 % Propionsäure im Wachstum gehemmt. Zur Hemmung von Bakterien sind höhere Konzentrationen von 1,6 - 6 % nötig.

Propionsäure wird von verschieden Mikroorganismen gebildet, z. B. von *Propionibacterium.* Dabei verwenden Propionsäurebakterien als Hauptausgangsprodukt Laktat, um aus 3 Mol Laktat - > 2 Mol Propinat + 1 Mol Acetat + 1 Mol CO₂ zu bilden. Propionsäurebakterien sind grampositiv, verfügen gewöhnlich über das Enzym Katalase und sind fakultativ anaerob bis aerotolerant. Das pH-Optimum für die Vermehrung liegt zwischen 6 und 7.

Leider wurde gezeigt, dass unterhalb von pH 5 die Wachstumsrate drastisch reduziert ist und nur sehr wenig Propionsäure gebildet wird, wodurch sich ein Zusatz von Propionsäurebakterien zur Herstellung von Sauerteigen als wenig sinnvoll darstellt.

Nichtsdestotrotz wurde der Einsatz von Propionsäurebakterien zur Etablierung einer Schutzkultur und damit zur Hemmung von Schimmelpilzen in Milchprodukten oder Weizenbroten beschrieben (Suotnalainen & Mäyrä-Mäkinen, 1999, Fermented Breads and Milk 79, 165-174). Auch hierbei hat es sich aber als nachteilig erweisen, dass Propionsäurebakterien in niedrigen pH-Werten eher schlecht wachsen und zu wenig Propionsäure bilden.

Die im Stand der Technik bekannten Verfahren zur biologischen Anreichung von Teigen sind somit sehr limitiert und Sauerteige, die üblicherweise pH von < 4 aufweisen, können bislang nicht durch derartige biologische Verfahren mit höheren Mengen an Essigsäure und Propionsäure angereichtet werden.

Es besteht daher ein Bedarf neue biologische Verfahren bereitzustellen, um eine Anreicherung von organischen Säuren in Brot und Backwaren aus Sauerteig zu Konservierungszwecken zu erreichen. Insbesondere ist es daher die Aufgabe der Erfindung biologische Verfahren bereit zustellen, die eine Anreicherung von Sauerteigen und Backwaren mit höheren Mengen an Essigsäure und/oder Propionsäure ermöglichen.

Zu diesem Zweck stellt die Erfindung ein Verfahren zur Herstellung von Sauerteig bereit, welches spezielle Starterkulturenmischung , die aus der Gruppe der Milchsäurebakterien ausgewählt sind, wobei wenigstens ein Lactobazillusstamm *Lb. diolivorans* ist, der in der Lage ist Propionsäure zu bilden.

*Lb. diolivorans* istausgewählt, da er einen anderen, als den von Propionibakterien bekannten, Laktat abbauenden Stoffwechselweg zur Herstellung von Propionsäure benutzen kann. Gemäß einer Ausführungsform verstoffwechseln die der Starterkultur zugesetzten Lactobazillen z.B. Milchsäure zu 1,2-Propandiol oder Propandiol und bilden hieraus Propionsäure.

Typischer Weise werden die der Sauerteigstarterkultur zugesetzten Milchsäurebakterien ausgewählt aus der Gruppe bestehend aus *Lb. diolivorans , Lb. buchneri, Lb. parabuchneri, L. brevis, L. reuteri, Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti , Lb. alimentarius, W. cibaria, W. confusa, P. acidilactici, P. parvulus* und *P. pentosaceus.* Gemäß einer weiteren Ausführungsform sind die der Starterkultur zugesetzten Milchsäurebakterien Reinkulturen.

Vorzugsweise ist wenigstens ein Stamm, der der Sauerteigstarterkultur zugesetzten Milchsäurebakterien ausgewählt aus der Gruppe *Lb. diolivorans* die funktionell in der Lage sind Propionsäure zu bilden und vorzugsweise Propandiol zu Propionsäure umzusetzen. In Sauerteigen, die mit einer solchen Starterkultur angesetzt und fermentiert werden, ist eine signifikante Anreicherung an organischen Säuren und insbesondere Propionsäure nachweisbar.

Gemäß einer Ausführungsform enthält daher die Sauerteigstarterkultur, sowie der fertige Sauerteig oder ein aus ihm gewonnenes Sauerteigkonzentrat den Mikroorganismus *Lactobacillus diolivorans.* Mittels einer molekularbiologischen Analyse kann der Mikroorganismus *Lactobacillus diolivorans* auch aus den fertigen Backwaren nachgewiesen werden.

Weiter vorzugsweise ist wenigstens ein zweiter Stamm, der der Sauerteigstarterkultur zugesetzten Milchsäurebakterien ausgewählt aus der Gruppe bestehend aus *Lb. buchneri, Lb. parabuchneri, L. brevis, L. bifermentans.* In Sauerteigen, die mit einer solchen Starterkultur angesetzt und fermentiert werden, ist eine signifikante Anreicherung an organischen Säuren und Essigsäure nachweisbar.

Gemäß einer Ausführungsform enthält daher die Sauerteigstarterkultur, sowie der fertige Sauerteig oder ein aus ihm gewonnenes Sauerteigkonzentrat den Mikroorganismus *Lactobacillus buchneri* oder *Lb. parabuchneri.* Mittels einer molekularbiologischen Analyse kann der Mikroorganismus *Lactobacillus buchneri, L. bifermentans, L. reuteri,* oder *Lb. parabuchneri* auch aus den fertigen Backwaren nachgewiesen werden.

Zum Verfahren zur Herstellung von Sauerteig, bzw. zur erfindungsrelevante Sauerteigstarterkultur werden die Milchsäurebakterienstämmen zugesetzt, die aus der Gruppe bestehend aus *Lb. diolivorans, Lb. buchneri, Lb. parabuchneri, Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti , Lb. alimentarius, W. cibaria, W. confusa, P. acidilactici, P. parvulus* und *P. pentosaceus, L. reutrei, L. brevis,* ausgewählt sind. Die für den Sauerteig bzw. die Starterkultur aus dieser Gruppe ausgewählten Lactobazillen dienen zur normalen Sauerteigherstellung durch Milchsäuregärung und stellen zum Teil Stoffwechselzwischenprodukte her, die zur weiteren Umsetzung zu Propionsäure bzw. zu erhöhten Essigsäurebildung herangezogen werden können.

Gemäß einer Ausführungsform werden dem Verfahren zur Herstellung von Sauerteig, bzw. zur erfindungsrelevante Sauerteigstarterkultur wenigstens die Milchsäurebakterienstämmen ausgewählt aus der Gruppe bestehend aus *Lb. diolivorans , Lb. buchneri, Lb. parabuchneri -* als Indikatororganismen - zugesetzt. Der Zusatz von weiteren Stämmen ausgewählt aus der Gruppe bestehend aus *Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti , Lb. alimentarius, W. cibaria, W. confusa, P. acidilactici, P. parvulus* und *P. pentosaceus* ist optional.

Mit dem erfindungsgemäßen Herstellungsverfahren kann gemäß weiterer Ausführungsformen in einem Zeitraum von ca 8-100 Tagen, vorzugsweise 10, 12, 14, 16 oder 30 Tagen ein Sauerteig bzw. Sauervorteig und im weiteren Backwaren hergestellt werden, die zwischen 0,1 % und 0,9% w/w, vorzugsweise 0,2% -0,4% w/w, vorzugsweise 0,3% -0,6% w/w, vorzugsweise 0,4% -0,8% dem erfindungsgemäßen Verfahren hergestellte Sauerteig bzw. ein aus diesem Sauerteig durch Einreduzierung hergestelltes Sauerteigkonzentrat, etwa 0,6% -0,9% w/w, 0,8% -1,5% w/w, 1,0% - 2,5% w/w, 1,9% - 3,5% w/w, 2,0% -4,5% w/w, 3,0% - 5,0% w/w, 4,0% - 6,5% w/w Propionsäure bez. auf die Mehleinwaage.

Der Gehalt an Essigsäure kann mit dem erfindungsgemäßen Verfahren gemäß einer Ausführungsform in einem Fermentationszeitraum von ca 8-100 Tagen, vorzugsweise 10, 12, 14, 16 oder 30 Tagen, auf einen Gehalt von mindestens 0,6% w/w und bis zu etwa 6% w/w Essigsäure bez. auf die Mehleinwaage eingestellt werden. Vorzugsweise enthält der gemäß dem erfindungsgemäßen Verfahren hergestellte Sauerteig bzw. ein aus diesem Sauerteig durch Einreduzierung hergestelltes Sauerteigkonzentrat, etwa 0,6% -0,9% w/w, 0,8% -1,2% w/w, 0,9% - 1,8% w/w, 1,0% - 2,0% w/w, 2,0% - 6,0% w/w Essigsäure bez. auf die Mehleinwaage.

Die isolierte oder gemeinsame Verwendung der Stämme *Lb. diolivorans, Lb. buchneri, Lb. parabuchneri* in Starterkulturen gemäß der Erfindung zur Herstellung von Sauerteig und weiter zur Herstellung von Sauerteigkonzentrat bietet den weiteren Vorteil, dass ein entsprechend hergestelltes Sauerteigkonzentrat über mehrere Monate und leicht bis zu einem halben Jahr stabil ist. Mit Stabilität ist in diesem Zusammenhang gemeint, dass die Keimzahl (Lebendkeimzahl) der Milchsäurebakterien über den angegebenen Zeitraum konstant bleibt. In herkömmlichen Sauerteigen oder Konzentraten verändern sich über die Zunahme des Milchsäuregehaltes im Laufe der Zeit die Wachstumsbedingungen sehr zu ungunsten der vorliegenden Keime. In der Konsequenz sterben die Milchsäurebakterien aufgrund von zu sauerem Milieu ab. Ein solcher Sauerteig bzw. Konzentrat kann nicht mehr als Backtriebmittel eingesetzt werden.

Im Sauerteig bzw Konzentrat gemäß der Erfindung bauen die eingesetzten Stämme, insbesondere die Stämme *Lb. diolivorans, Lb. buchneri* oder *Lb. parabuchneri,* Milchsäure zu anderen organischen Säuren ab. Die Wachstumsbedingungen bleiben daher für alle vorliegenden Milchsäurebakterien erträglich und es kommt - auch nach mehreren Monaten - nicht zu deren Absterben.

Als Indikatorstamm kann daher gemäß einer Ausführungsform für die vorliegende erfindungsgemäße Zusammensetzung der Starterkultur bzw. des Sauerteiges *Lb. diolivorans* herangezogen werden. Vorzugsweise enthält die erfindungsgemäße Zusammensetzung der Starterkultur bzw. des Sauerteiges mindestens 10⁶-10⁸ Lactobacillen pro Liter, wobei ca. 10-50% *Lb. diolivorans* sind.

Mit dem erfindungsgemäßen Herstellungsverfahren kann gemäß weiterer Ausführungsformen zur Konservierung von pastösen und flüssigen Sauerteigprodukten und daraus resultierenden Backwaren einsetzbar.

Besonders beachtenswert ist es, dass das erfindungsgemäßen Herstellungsverfahren zwar nicht zu sehr hohen Propionsäuremengen im Teig und später in den Backwaren führt, dass jedoch durch die Kombination der durch Lactobazillenfermentation entstandenen Säure, also Milchsäure, Essigsäure und Propionsäure, eine verbesserte Konservierung mit verhältnismäßig niedrigeren Propionsäuremengen erzielt werden kann.

Mit dem Fachmann bekannten Verfahren wurde eine Bestimmung des Propionsäureverlustes durchgeführt, um zu ermitteln wie viel Propionsäure in den verschiedenen Zwischenprodukten (Teig versus Backware) vorliegt. Es konnte gezeigt werden, dass während des Backens und bis zu 24h danach, die Konzentration an Propionsäure etwa konstant blieb. Das ist damit zu erklären, dass zum Ende der Backzeit die Brotkrume eine Temperatur von höchstens 98 °C - 106 °C aufweist. Propionsäure hat einen Siedepunkt von 141 °C und bleibt somit während des Ausbackens und auch nach dem Abkühlen in der Brotkrume erhalten und damit den gewünschten Schimmelschutz bewirken kann.

In den durchgeführten Lagerversuchen konnten die Erfinder zeigen, dass in einem Referenzversuch zwischen Propionsäure-freiem Brot und Brot dem Propionsäure zugesetzt worden war, das Brot, dem 0,4% Propionsäure zugesetzt war eine um 14 Tage längere schimmelfreie Zeit im Vergleich zu dem Propionsäure-freien Brot zeigte.

Auf beimpften Brotscheiben zeigte der Wachstumvergleich von *A. niger* und *P. roqueforti* auf Propionsäure-freiem Brot bereits nach 5 Tagen 6 bewachsene Punkte von *A. niger,* und bereits 10 Punkte von *P. roqueforti.* Die beimpften Brotscheiben wiesen bereits nach 2-4 Tagen Mycelien von *P. roqueforti* auf. Um dieses Schimmelpilzwachstum zu hemmen, bedurfte es einer Konzentration von über 0,4 % w/w Propionsäure (bez. auf die Mehleinwaage).

Beim Vergleich des Mycelienwachstum von *A. niger* auf Broten gemäß der Erfindung gebildete Propion- und Essigsäure im Teig enthielten zeigte sich nach 8 bzw. nach 9 Tagen des Challenge-Versuches, dass das Wachstum von *A. niger* bereits durch Konzentrationen von 0,3 % Propionsäure bzw. einer Konzentration von 0,2 % w/w Propion- und 0,2% w/w Essigsäure (bez. auf Mehleinwaage) bis zum Untersuchungsende unterdrückt werden konnte.

Mit Hilfe der erfindungsgemäß ausgewählten Lactobazillen konnten Propionsäuremengen von 0,1 bis 6 % im Sauerteig erzielt werden. Wie die Challenge-Versuche jedoch zeigten, konnte bereits bei einem Gehalt von 0,2 % Propion- und 0,2 % Essigsäure das Wachstum des Schimmelpilzes *A*. *niger* vollständig unterdrückt werden. Die erfindungsgemäße Kofermentation mit Lactobazillen, die unter anderem sowohl zur Bildung von Essigsäure und Propionsäure führt, zeigt damit einen deutlichen Vorteil und eine verbesserte Konservierung gegenüber einem vergleichbaren chemischen Zusatz von mindestens 0,4% Propionsäure um vergleichbare Konservierungsergebnisse zu erzielen.

Zusammenfassend zeigt sich, dass eine direkte Essigsäure und Propionsäure Anreicherung im Sauerteig über einen anaeroben Stoffwechselweg mit Hilfe von Milchsäurebakterien eine effektive Methode ist und mit dieser eine deutliche Verbesserung der Brotkonservierung erreicht werden kann.

Ein weiterer besonders erwähnenswerter Vorteil ist es, dass Unterschiede zwischen der chemisch zugesetzten und der fermentativ gebildeten Propion- bzw. Essigsäure geruchlich zu Gunsten der fermentativ gebildeten Propionsäure festgestellt werden konnten. Es ist somit eine höhere Akzeptanz des Verbrauchers für die fermentative Konservierung mit den erfindungsgemäßen Kulturen zu erwarten.

Weitere Vorteile, welche die erfindungsgemäße Kofermentation zur Bildung eines biologischen Schutzes durch u.a. Essigsäure und Propionsäure bietet, sind zum einen die kurze Fermentationsdauer und zum anderen die Möglichkeit eines deklarationsfreien Produktschutz.

### Beispiele

### 1. Einsatz von einigen ausgewählten Lactobazillen zur Propionsäurebildung in Weizenteigen.

Für diese Experimente wurden folgende Typstämme eingesetzt *Lb. Buchneri* DSMZ 20057, *Lb. parabuchneri* DSMZ 5707 und *Lb. Diolivorans* DSMZ 14421. Sie wurden morphologisch charakterisiert, um sie anhand von Kolonieformen differenziert auszählen zu können.

Zur Adaption der Lactobazillen an das Medium Teig, wurden zunächst jeweils 1% Übernachtkultur *Lb. buchneri, Lb. buchneri , Lb. parabuchneri* und *Lb. diolivorans* in den Teig gegeben und bei 28 °C für 24 h geführt. Mit diesem Anstellgut wurden sterilisierte Weizensauerteige so beimpft, dass bezogen auf die Gesamtmenge, 10 % Teig mit *Lb. diolivorans* jeweils in Kombination mit 10 % Teig mit *Lb. buchncri l Lb. parabuchneri* eingesetzt wurden. Die Teige wurden anaerob in gasdichten Tüten bei 28 °C gelagert und die Menge an organischen Säuren, sowie der pH-Wert und der Säuregrad ermittelt.

In Tab. 1 sind die Ergebnisse der Fermentationen dargestellt. In den dargestellten Versuchsansätzen wurden bis zu 0,2 % Propionsäure im Teig gebildet. Nach 14 Tagen zeigten sich ähnliche Mengen an Propion- und Essigsäure in allen Teigen. Im Weizensauerteig mit *Lb. parabuchneri* und *Lb. diolivofans* konnte nach 7 Tagen noch keine Propionsäure verzeichnet werden. Die Abnahme der Milchsäuremenge war bei allen Versuchsansätzen nachweisbar. Der pH-Wert lag nach 14 Tagen bei allen Fermentationen bei 3,47 und der Sr° zwischen 41 und 42 (0,1n NaOH / 10 g). Die Lebendkeimzahlen lagen nach 7 Tagen bei 10⁷ KBE / g.

**Tab. 1: Übersicht der organischen Säuren während der Propionsäurefermentationen von Lb. buchneri / Lb. parabuchneri in Kombination mit Lb. diolivorans**

| **Zeit t [d]** | ***Lb. buchneri* und *Lb. diolivorans*** | ***Lb. parabuchneri* und *Lb. diolivorans*** |
|---|---|---|
| 0 | - Propionsäure | - Propionsäure |
| | 2 g Essigsäure | 2 g Essigsäure |
| | 34 g Milchsäure | 34 g Milchsäure |
| 7 | 1,6 g Propionsäure | - Propionsäure |
| | 2,2 g Essigsäure | 2,1 g Essigsäure |
| | 30,44 g Milchsäure | 29,24 g Milchsäure |
| 14 | 2,0 g Propionsäure | 2,1 g Propionsäure |
| | 2,0 g Essigsäure | 2,0 g Essigsäure |
| | 29,73 g Milchsäure | 28,64 g Milchsäure |

### 2. Bildung von Essigsäure und Propionsäure in Roggenteigen

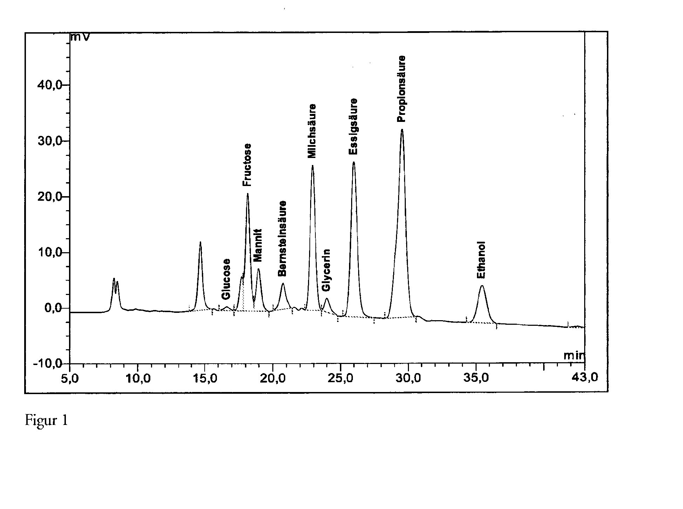

In einem weiteren Ausführungsbeispiel wurden *L. buchneri* und *L. diolivorans* in einem Sauerteig bestehend aus Roggenvollkornmehl und Wasser eingeimpft und bei Raumtemperatur anaerob inkubiert. Nach drei Monaten wurde der Sauerteig der Luft ausgesetzt und zeigte innerhalb der nächsten 4 Wochen keinerlei Anzeichen eines Wachstums von Schimmelpilzen oder Hefen. Nach den drei Monaten wurde ebenfalls mittels HPLC (Trennung bei 70 °C mit Merck RT300-7,8 OAKC -Säule bei einem Fluss von 0,4 ml pro min und 0,01 N Schwefelsäure als Laufmittel und RI-Detektion) die Konzentration an Essigsäure mit 15 g/kg und Propionsäure mit 19 g/kg bestimmt. Das Chromatogramm dieser Trennung ist als Figur 1 beigefügt.

## Patentansprüche

1. Verfahren zur Herstellung von Sauerteig durch Co-Fermentation von Milchsäurebakterien, wobei wenigstens ein erster Stamm ausgewählt ist aus der Gruppe enthaltend *Lactobacillus diolivorans* und wobei wenigstens ein zweiter Stamm, ausgewählt ist aus der Gruppe der Lactobazillen enthalten *Lb. buchneri, Lb. parabuchneri, Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti, Lb. alimentarius, L. reuteri, L. brevis, W. cibaria, W. confusa, P. acidilactici, P. parvulus* und *P. pentosaceus.*

2. Verfahren zur Herstellung von Sauerteig gemäß Anspruch 1, wobei nach einer 10 tägigen Fermentation mindestens 0,3 % Propionsäure pro Liter Sauerteig nachweisbar sind.

3. Verfahren zur Herstellung von Sauerteiggemäß Anspruch 1, wobei nach einer 10 tägigen Fermentation mindestens 0,7 % Essigsäure pro Liter Sauerteig nachweisbar sind.

4. Sauerteig oder Sauerteigkonzentrat hergestellt gemäß dem Verfahren der Ansprüche 1 bis 3 enthaltend cofermentierende Milchsäurebakterien, wobei wenigstens ein erster Stamm ausgewählt ist aus der Gruppe enthaltend *Lactobacillus diolivorans* und wobei wenigstens ein zweiter Stamm, ausgewählt ist aus der Gruppe der Lactobazillen enthalten *Lb. buchneri, Lb. parabuchneri, Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti, Lb. alimentarius, L. reuteri, L. brevis, W. cibaria, W. confusa, P. acidilactici, P. parvulus* und *P. pentosaceus,* **dadurch gekennzeichnet, dass** *Lactobacillus diolivorans* in der Lage ist aus Milchsäure 1,2-Propionsäure, Propandiol, Essigsäure und Propionsäure zu bilden.

5. Sauerteig oder Sauerteigkonzentrat gemäß Anspruch 4 enthaltend *Lactobacillus diolivorans* und wenigstens einen Stamm ausgewählt von *Lb. buchneri* oder *Lb. parabuchneri.*

6. Sauerteigkonzentrat hergestellt durch Einreduzieren aus dem Sauerteig gemäß Anspruch 5 **dadurch gekennzeichnet, dass** pro Liter Konzentrat mindestens 0,7% Essigsäure und/oder mindestens 0,3% Propionsäure nachweisbarsind.

7. Verwendung von Sauerteig oder Sauerteigkonzentrat hergestellt nach einem der Ansprüche 5 oder 6 zur biologischen Konservierung von Brot oder Backwaren.

## Claims

1. A method of producing sourdough by co-fermentation of lactic acid bacteria, wherein at least one first strain is selected from the group comprising *Lactobacillus diolivorans* and at least one second strain is selected from the group of lactobacilli comprising *Lb. buchnerl, Lb. parabuchneri, Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti, Lb. alimentarius, L. reuteri, L. brevis, W. cibaria, W. confusa, P. acidilactici, P. parvulus* and *P. pentosaceus,*

2. The method of producing sourdough of claim 1, wherein, after a 10-day fermentation, at least 0.3% of propionic acid per liter of sourdough is detectable.

3. The method of producing sourdough of claim 1, wherein, after a 10-day fermentation, at least 0.7% acetic acid per liter of sourdough is detectable.

4. A sourdough or sourdough concentrate produced by the method of claims 1 to 3, the sourdough or sourdough concentrate comprising co-fermenting lactic acid bacteria, wherein at least one first strain is selected from the group comprising *Lactobacillus diolivorans,* and wherein at least one second strain is selected from the group of lactobacilli comprising *Lb. buchneri, Lb. parabuchneri*, *Lb. plantarum, Lb. pontis, Lb. sanfranciscensis, Lb. crispatus, Lb.suntoryeus, Le. argentinum, Lb. helveticus, Lb. paralimentarius, Lb. fermentum, Lb. paracasei, Lb. frumenti, Lb. alimentarius, L. reuteri, L. brevis, W. cibaria, W. confuso, P. acidilactici, P. parvulus* and *P*. *pentosaceus,*
**characterized in that** *Lactobacillus diolivorans* is capable of forming 1,2-propionic acid, propanediol, acetic acid and propionic acid from lactic acid.

5. The sourdough or sourdough concentrate of claim 4, comprising *Lactobacillus diolivorons* and at least one strain selected from *Lb. buchneri* or *Lb. parabuchneri.*

6. A sourdough concentrate produced by concentration from the sourdough of claim 5, **characterized in that**, per liter of concentrate, at least 0.7% of acetic acid and/or at least 0.3% of propionic acid are detectable.

7. The use of sourdough or sourdough concentrate produced according to either of claims 5 or 6 for biological preservation of bread or baked goods.

## Revendications

1. Procédé destiné à la fabrication de levain par ce-fermentation de bactéries d'acide lactique, au moins une première souche étant sélectionnée à partir du groupe contenant du *Lactobacillus diolivorons* et au moins une seconde souche étant sélectionnée à partir du groupe des lactobacilles contenant le *Lb. buchneri, le Lb. parabuchneri, le Lb. plantarurn, le Lb. pontis, le Lb. sanfranciscensts*, *le Lb. crispatus, le Lb. suntoryeus, le Le. argentinum, le l.b. helveticus, le Lb. paralimentarius, le Lb. fermentum, le Lb. paracasei, le Lb. frumenti, le Lb. alimentarius, le L. reuteri, le L. brevis, le W. cibaria, le W. coufusa, le P. ocidilactici*, *le P*. *parvulus* et *le P*. *pentosaceus.*

2. Procédé destiné à la fabrication de levain selon la revendication 1, au moins 0,3 % d'acide propionique par litre de levain étant décelable l'issue d'une fermentation de 10 jours.

3. Procédé destiné à la fabrication de levain selon la revendication 1, au moins 0,7 % d'acide acétique par litre de levain étant décelable à l'issue d'une fermentation de 10 jours.

4. Levain ou concentré de levain fabriqué selon le procédé des revendications 1 à 3, contenant des bactéries d'acide lactique cofermentantes, au moins une première souche étant sélectionnée à partir du groupe contenant du *Lactabacillus diolivorans* et au moins une deuxième souche étant sélectionnée à partir du groupe des lactobacilles contenant le *Lb. buchneri, le Lb. parabuchneri, le Lb. plantarum, le Lb. pontis, le Lb. sanfranciscensis, te Lb. crispatus, le Lb. suntoryeus, le Le. argentinum, le Lb. helveticus, le Lb. parallmentarius, le Lb. fermentum, le Lb. paracasei, le Lb. frumenti, le Lb. alimentarius*, *le L. reuteri, le L. brevis, le W. cibaria, le W. confusa, le P. acidilactici, le P. parvulus* et le *P. pentosaceus,*
**caractérisé en ce que** le *Lactobacillus diolivorans* est en mesure de constituer à partir de l'acide lactique de l'acide 1,2-propionique, du propandiol, de l'acide acétique et d l'acide propionique,

5. Levain ou concentré de levain fabriqué selon la revendication 4, contenant du *Lactobacilus diolivorans* et au moins une souche sélectionnée à partir du *Lb. buchneri* ou du *Lb. parabuchneri.*

6. Concentré de levain fabriqué par réduction à partir du levain selon la revendication 5, **caractérisé en ce que**, par litre de concentré, au moins 0,7 % d'acide acétique et au moins 0,3 % d'acide propionique sont décelables.

7. Utilisation de levain ou de concentré de levain fabriqué selon une quelconque des revendications 5 ou 6 en vue de la conservation biologique du pain ou des produits de boulangerie.
